**Europäisches Patentamt**

**European Patent Office**

**Office européen des brevets**

(19)

(11) Veröffentlichungsnummer: **0 023 588 B1**

(12) # EUROPÄISCHE PATENTSCHRIFT

(45) Veröffentlichungstag der Patentschrift:
21.04.82

(21) Anmeldenummer: 80103877.9

(22) Anmeldetag: 08.07.80

(51) Int. Cl.³: **C 01 F 7/30, C 01 B 13/18, C 04 B 35/10, C 04 B 43/00, C 01 G 1/02**

(54) **Temperaturstabilisiertes, pyrogen hergestelltes Aluminiumoxid-Mischoxid, das Verfahren zu seiner Herstellung und Verwendung.**

(30) Priorität: 03.08.79 DE 2931585

(43) Veröffentlichungstag der Anmeldung:
11.02.81 Patentblatt 81/6

(45) Bekanntmachung des Hinweises auf die Patenterteilung:
21.04.82 Patentblatt 82/16

(84) Benannte Vertragsstaaten:
AT BE CH DE FR GB IT LI LU NL SE

(56) Entgegenhaltungen:
DE-A-2 048 220
DE-A1-2 533 925
DE-A1-2 702 896
DE-B-2 036 124
EP-A1-0 013 387
FR-A1-2 399 391

(73) Patentinhaber: Degussa Aktiengesellschaft,
Weissfrauenstrasse 9, D-6000 Frankfurt am Main 1 (DE)

(72) Erfinder: Kleinschmit, Peter, Dr., Wildaustrasse 19,
D-6450 Hanau 9 (DE)
Erfinder: Schwarz, Rudolf, Dr., Taunusstrasse 2,
D-8755 Alzenau (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Temperaturstabilisiertes, pyrogen hergestelltes Aluminiumoxid-Mischoxid,
das Verfahren zu seiner Herstellung und Verwendung**

Gegenstand der Erfindung ist ein temperaturstabilisiertes, pyrogen hergestelltes Aluminiumoxid-Mischoxid mit einer BET-Oberfläche von 50 bis 200 m$^2$/g, welches 0,5 bis 20 Gew.-% Siliciumdioxid als Bestandteil des Mischoxides enthält.

In einer bevorzugten Ausführungsform enthält das Aluminiumoxid-Mischoxid 0,6 bis 14,5 Gew.-% Siliciumdioxid.

Das erfindungsgemäße Aluminiumoxid-Mischoxid kann bis auf 1325° C erhitzt werden, ohne daß eine Phasenumwandlung in $\alpha$-Al$_2$O$_3$ erfolgt, wogegen sich nicht stabilisiertes Al$_2$O$_3$ bereits zwischen 1175 und 1200° C in die alpha-Modifikation umlagert.

Ein weiterer Gegenstand der Erfindung ist ein Verfahren zur Herstellung des temperaturstabilisierten Aluminiumoxid-Mischoxides mit einer BET-Oberfläche von 50 bis 200 m$^2$/g, welches 0,5 bis 20 Gew.-% Siliciumdioxid als Bestandteil des Mischoxides enthält, welches dadurch gekennzeichnet ist, daß man wasserfreies Aluminiumchlorid verdampft, zusammen mit Luft in die Mischkammer eines bekannten Brenners überführt, dort mit Wasserstoff und Siliciumtetrachlorid in einem derartigen Verhältnis, das das entsprechend zusammengesetzte Aluminiumoxid-Mischoxid ergibt, vermischt, das 4-Komponentengemisch in einer Reaktionskammer verbrennt, danach das entstandene feste Aluminiumoxid-Mischoxid von den gasförmigen Reaktionsprodukten abtrennt und gegebenenfalls durch Erhitzen in feuchter Luft von anhaftendem Chlorwasserstoff befreit.

Ein weiterer Gegenstand der Erfindung ist die Verwendung des temperaturstabilisierten Aluminiumoxid-Mischoxides zur Herstellung von Wärmedämm-Materialien und -Mischungen.

Der erfindungsgemäße Gegenstand wird anhand der folgenden Beispiele näher erläutert und beschrieben:

Beispiel 1

(Vergleichsbeispiel für undotiertes
Aluminiumoxid)

4 kg wasserfreies Aluminiumchlorid werden pro Stunde zusammen mit 8,35 Nm$^3$ Luft in die Mischkammer eines Brenners bekannter Bauart übergeführt, in die gleichzeitig 1,4 m$^3$/h Wasserstoff eingeleitet werden. Das Dampf/Gasgemisch strömt mit einer Geschwindigkeit von ca. 40 m/sec aus der Brennermündung und brennt in eine Reaktionskammer. Danach werden die Reaktionsprodukte in einem Kühlsystem auf etwa 130° C abgekühlt, das gebildete Al$_2$O$_3$ mit einer Primärteilchengröße von 7 nm in Zyklonen oder in einem Filter bekannter Konstruktion abgeschieden und gegebenenfalls nachgesäuert. Das abgeschiedene $\gamma$-Al$_2$O$_3$ lagert sich durch Glühung zwischen 1175 und 1200° C unter starker Vergrößerung der Primärteilchendurchmesser (>100 nm) in die $\alpha$-Modifikation um. Dabei nimmt die Schüttdichte des Materials um das 6fache von 55 g/l auf 323 g/l zu. Während das ungeglühte, nicht umgewandelte Ausgangsprodukt in loser, mit 15 g/cm$^2$ beschwerter Schüttung eine Wärmeleitfähigkeit von 1,6 × 10$^{-2}$ W/m · °K bestimmt nach DIN 52 616 aufweist, besitzt es nach der Glühung auf 1200° C, d. h. nach der Phasenumwandlung, eine Leitfähigkeit von 13,4 × 10$^{-2}$ W/m · °K und ist damit als Wärmedämmittel nicht mehr einsetzbar.

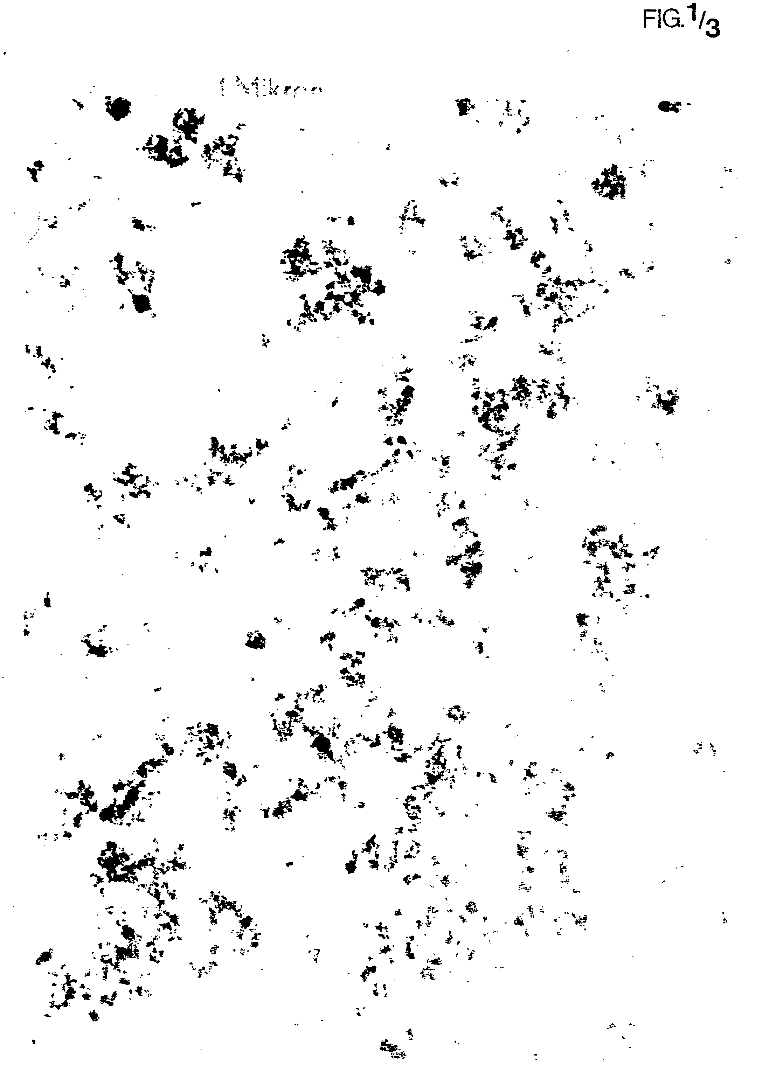

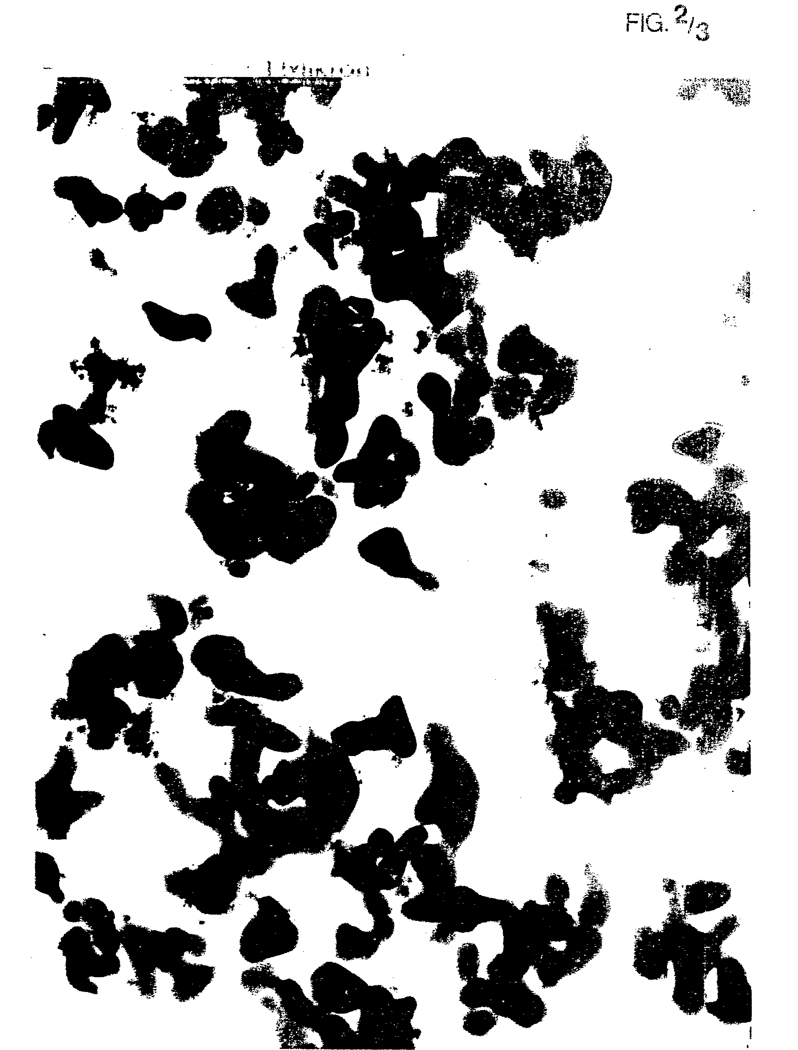

Die REM-Aufnahme nach Fig. 1 zeigt das bei 1175° C und die REM-Aufnahme nach Fig. 2 das bei 1200° C geglühte, vergröberte Produkt.

Beispiel 2

Man verfährt wie unter Beispiel 1 angegeben, leitet jedoch zusätzlich 100 g Siliciumtetrachlorid-Dampf in die Mischkammer des Brenners ein. Das abgetrennte Aluminiumoxid-Mischoxid hat nach der Abscheidung einen SiO$_2$-Gehalt von 2,5%, eine spezifische Oberfläche von 150 m$^2$/g und einen mittleren Teilchendurchmesser von 7 nm. Bei der Glühung lagert sich dieses Produkt zwischen 1325 und 1350° C unter weitgehendem Verlust der spezifischen Oberfläche (<10 m$^2$/g) und erheblicher Teilchenvergröberung in die $\alpha$-Modifikation bzw. in Silimanit um. Die Schüttdichte beträgt vor der Glühung 53 g/l.

Die Bewertung der Stabilität bei der Glühung ist bei dem Aluminiumoxid-Mischoxid relativ einfach und mit geringem Aufwand verbunden. Denn die Kristallphase ändert sich innerhalb einer Spanne von 25° C, womit ein spontaner Zusammenbruch der BET-Oberfläche und ein steiler Anstieg der Teilchengröße verbunden ist.

Das Produkt, das in der beschriebenen Weise durch Dotierung mit 2,5% Siliciumdioxid phasenstabilisiert wurde, besitzt auch nach der mehrstündigen Glühung selbst auf über 1300° C eine relativ wenig veränderte Schüttdichte von 98 g/l. Seine Wärmeleitfähigkeit in loser Schüttung und einer Beschwerung von 15 g/cm$^2$ beträgt zum Beispiel nach einer 5stündigen Glühung bei 1300° C nur 2 6 × 10$^{-2}$ W/m · °K, wodurch deutlich wird, daß es sich in diesem Temperaturbereich noch hervorragend als Wärmedämmstoff bzw. für die Herstellung von wärmedämmenden Mischungen eignet.

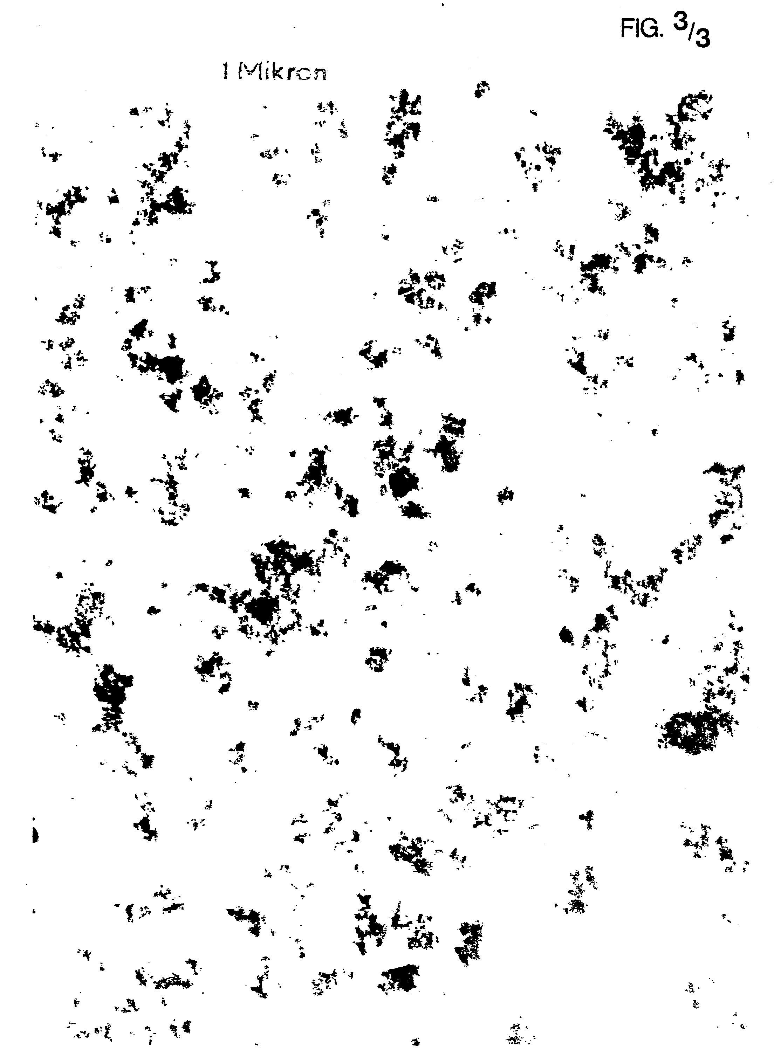

Die REM-Aufnahme nach Fig. 3 zeigt das bei 1300° C geglühte Produkt.

**Patentansprüche**

1. Temperaturstabilisiertes, pyrogen hergestelltes Aluminiumoxid-Mischoxid mit einer BET-Oberfläche von 50 bis 200 m²/g, welches 0,5 bis 20 Gew.-% Siliciumdioxid als Bestandteil des Mischoxides enthält.

2. Verfahren zur Herstellung des temperaturstabilisierten, pyrogen hergestellten Aluminiumoxid-Mischoxides mit einer BET-Oberfläche von 50 bis 200 m²/g, welches 0,5 bis 20 Gew.-% Siliciumdioxid als Bestandteil des Mischoxides enthält, dadurch gekennzeichnet, daß man wasserfreies Aluminiumchlorid verdampft, zusammen mit Luft in die Mischkammer eines bekannten Brenners überführt, dort mit Wasserstoff und Siliciumtetrachlorid in einem derartigen Verhältnis, das das entsprechend zusammengesetzte Aluminiumoxid-Mischoxid ergibt, vermischt, das 4-Komponentengemisch in einer Reaktionskammer verbrennt, danach das entsprechende feste Aluminiumoxid-Mischoxid von den gasförmigen Reaktionsprodukten abtrennt und gegebenenfalls durch Erhitzen in feuchter Luft von anhaltendem Chlorwasserstoff befreit.

3. Verwendung des temperaturstabilisierten, pyrogen hergestellten Aluminiumoxid-Mischoxides gemäß Anspruch 1 zur Herstellung von Wärmedämm-Materialien und -Mischungen.

## Claims

1. A temperature-stabilised, pyrogenically produced aluminium oxide mixed oxide having a BET-surface of from 50 to 200 m²/g and containing from 0.5 to 20% by weight of silicon dioxide as part of the mixed oxide.

2. A process for producing the temperature-stabilised, pyrogenically produced aluminium oxide mixed oxide having a BET-surface of from 50 to 200 m²/g and containing from 0.5 to 20% by weight of silicon dioxide as part of the mixed oxide, characterised in that anhydrous aluminium chloride is vaporised, transferred with air to the mixing chamber of a known burner where it is mixed with hydrogen and silicon tetrachloride in a ratio which gives the aluminium oxide mixed oxide of corresponding composition, the 4-component mixture is burnt in a reaction chamber, the corresponding solid aluminium oxide mixed oxide is subsequently separated from the gaseous reaction products and optionally freed from adhering hydrogen chloride by heating in moist air.

3. The use of the temperature-stabilised, pyrogenically produced aluminium oxide mixed oxide claimed in Claim 1 for the production of heat-insulating materials and mixtures.

## Revendications

1. Oxyde mixte-oxyde d'aluminium pyrogénique, thermiquement stabilisé, avec une surface BET de 50 à 200 m²/g, contenant de 0,5 à 20% en poids de dioxyde de silicium comme composant de l'oxyde mixte.

2. Procédé pour la fabrication d'oxyde mixte-oxyde d'aluminium pyrogénique, thermiquement stabilisé, avec une surface BET de 50 à 200 m²/g, contenant de 0,5 à 20% en poids de dioxyde de silicium comme composant de l'oxyde mixte, procédé caractérisé en ce que l'on fait évaporer du chlorure d'aluminium exempt d'eau, qu'on le transfère en commun avec de l'air, dans la chambre de mélange d'un brûleur connu, là on le mélange avec de l'hydrogène et du tetrachlorure de silicium dans un rapport tel, que l'on obtienne l'oxyde mixteoxyde d'aluminium de composition appropriée, on procède à la combustion du mélange à 4 composants dans une chambre de réaction puis on séparé l'oxyde mixte-oxyde d'aluminium solide des produits réactionnels gazeux et éventuellement, on élimine l'acide chlorhydrique contenu, par chauffage dans de l'air humide.

3. Application de l'oxyde mixte-oxyde d'aluminium pyrogénique, thermiquement stabilisé, selon la revendication 1, pour la fabrication de matériau et de mélanges réfractaires.

0 023 588

FIG.1/3

1 Mikron

FIG. $^2/_3$

FIG. $3/3$

1 Mikron

0 023 588

9